# EUROPEAN PATENT SPECIFICATION

(11) **EP 2 933 808 B1**
(45) Date of publication and mention of the grant of the patent: **08.07.2020**
(21) Application number: 13862935.7
(22) Date of filing: 02.12.2013
(51) Int. Cl.: H01G 11/26, H01G 11/86, H01M 10/052, H01M 10/0587, H01G 11/06, H01G 11/82, H01G 11/24, H01M 10/0525

(54) **METHOD FOR MANUFACTURING ELECTRICITY-STORAGE DEVICE, AND ELECTRICITY-STORAGE DEVICE**
VERFAHREN ZUR HERSTELLUNG EINER STROMSPEICHERVORRICHTUNG UND STROMSPEICHERVORRICHTUNG
PROCÉDÉ DE FABRICATION DE DISPOSITIF DE STOCKAGE D'ÉLECTRICITÉ, ET DISPOSITIF DE STOCKAGE D'ÉLECTRICITÉ

(30) Priority: 13.12.2012 JP 2012272636
(43) Date of publication of application: 21.10.2015
(73) Proprietor: JM Energy Corporation, Hokuto-City, Yamanashi 409-1501 (JP)
(72) Inventor: NANSAKA, Kenji, Hokuto-shi Yamanashi 409-1501 (JP); CHIBA, Takashi, Hokuto-shi Yamanashi 409-1501 (JP)
(74) Representative: TBK
(86) International application number: PCT/JP2013/082330
(87) International publication number: WO 2014/091957

(56) References cited:
- EP-A1- 2 372 732
- JP-A- H10 270 068
- JP-A- H11 312 517
- JP-A- 2007 067 105
- JP-A- 2010 157 540
- JP-A- 2010 157 541
- JP-A- 2010 157 541
- JP-A- 2012 174 579

## Description

### TECHNICAL FIELD

The present invention relates to a method for producing an electrical storage device, and an electrical storage device.

### BACKGROUND ART

In recent years, a lithium-ion capacitor that utilizes the electrical storage principle of a lithium-ion secondary battery and the electrical storage principle of an electrical double-layer capacitor has attracted attention as an electrical storage device that may be used for applications that require high energy density and high output characteristics. The lithium-ion capacitor is configured so that the energy density can be significantly increased by causing the negative electrode to occlude (store) and support lithium ions (hereinafter may be referred to as "doping") using an electrochemical method or the like to lower the potential of the negative electrode.

For example, WO2010/073930 discloses a technique that forms a wound element by winding a positive electrode, a negative electrode, and a lithium ion source (wherein the positive electrode and the negative electrode are situated on either side of a separator), and dopes the negative electrode with lithium ions through electrochemical contact between the negative electrode and the lithium ion source. In WO2010/073930, the wound element is placed in a casing having a circular cross-sectional shape, and has an approximately circular cross-sectional shape Documents teaching wound techniques are JPH10270068A, JP2010157541A, EP2372732A1, JPH11312517A, JP2012174579A and JP2010157540A.

### SUMMARY OF THE INVENTION

### TECHNICAL PROBLEM

The wound element may have a cross-sectional shape other than a circular cross-sectional shape corresponding to the shape of the casing in which the wound element is placed. In such a case, it may be difficult to uniformly dope the negative electrode with lithium ions released from the lithium ion source. For example, if the negative electrode is excessively doped with lithium ions, lithium dendrites may precipitate during repeated charge and discharge, and pass through the separator to short-circuit the positive electrode and the negative electrode. This may decrease the lifetime of the electrical storage device, and impair the reliability of the electrical storage device.

An object of several aspects of the invention is to provide a method for producing an electrical storage device that makes it possible to uniformly dope the negative electrode with lithium ions. Another object of several aspects of the invention is to provide an electrical storage device in which the negative electrode is uniformly doped with lithium ions.

### SOLUTION TO PROBLEM

The invention as defined by the appended claims 1 to 11 was conceived in order to solve the above problem.

### ADVANTAGEOUS EFFECTS OF THE INVENTION

The method for producing an electrical storage device according to the aspects of the invention can suppress a situation in which the part of the negative electrode situated in the curved part of the wound element is excessively doped with lithium ions, and ensures that the negative electrode is uniformly doped with lithium ions.

### BRIEF DESCRIPTION OF DRAWINGS

FIG. 1 is a cross-sectional view schematically illustrating the cell according to the first embodiment.
FIG. 2 is a perspective view schematically illustrating the wound element included in the cell according to the first embodiment.
FIG. 3 is a cross-sectional view schematically illustrating a state in which the wound element included in the cell according to the first embodiment is extended.
FIG. 4 is a cross-sectional view schematically illustrating a state in which the wound element included in the cell according to the first embodiment is extended.
FIG. 5 is a cross-sectional view schematically illustrating a state in which the wound element included in the cell according to the first embodiment is extended.
FIG. 6 is a cross-sectional view schematically illustrating a state in which the wound element included in the cell according to the first embodiment is extended.
FIG. 7 is a cross-sectional view schematically illustrating the electrical storage device according to the first embodiment.
FIG. 8 is a flowchart illustrating the method for producing the electrical storage device according to the first embodiment.
FIG. 9 is a cross-sectional view schematically illustrating the production step that produces the electrical storage device according to the first embodiment.
FIG. 10 is a cross-sectional view schematically illustrating the cell according to the first modification of the first embodiment.
FIG. 11 is a cross-sectional view schematically illustrating the cell according to the second modification of the first embodiment.
FIG. 12 is a cross-sectional view schematically illustrating the cell according to the second embodiment.
FIG. 13 is a cross-sectional view schematically illustrating the cell according to the comparative example.

### DESCRIPTION OF EMBODIMENTS

Exemplary embodiments of the invention are described below with reference to the drawings. Note that the invention is not limited to the following exemplary embodiments. It is intended that the invention includes various modifications that may be practiced without departing from the scope of the invention as defined in the appended claims.

### 1. First embodiment

### 1.1. Electrical storage device

An electrical storage device according to a first embodiment of the invention is described below with reference to the drawings. The electrical storage device according to the first embodiment is formed by doping (pre-doping) a negative electrode 50 with lithium ions released from a lithium ion source. More specifically, the electrical storage device according to the first embodiment is formed by placing a wound element in a casing, and injecting an electrolyte solution into the casing to effect pre-doping. A state (hereinafter may be referred to as "cell") before pre-doping is performed (i.e., before the electrolyte solution is injected) will be described first, and the electrical storage device will be described thereafter.

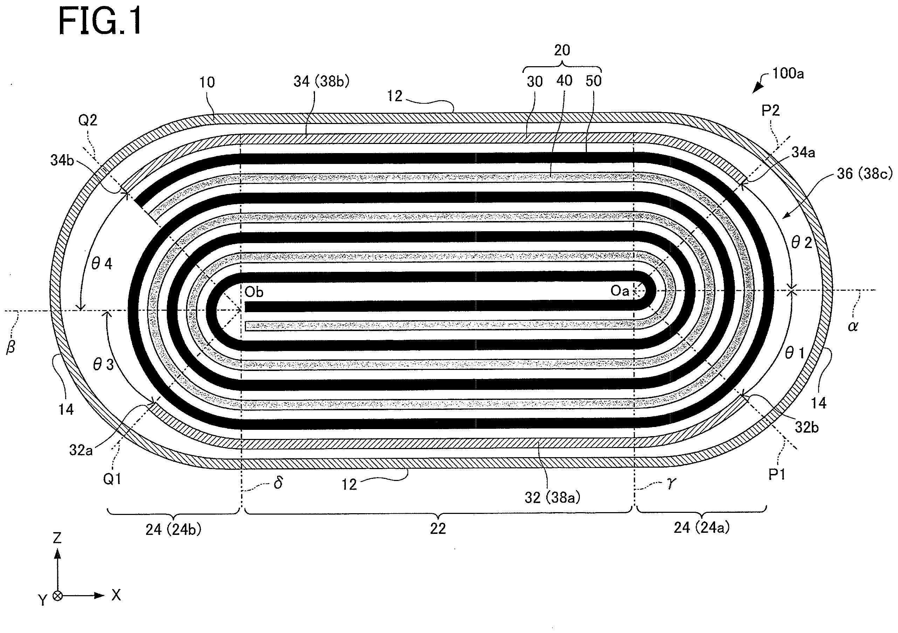

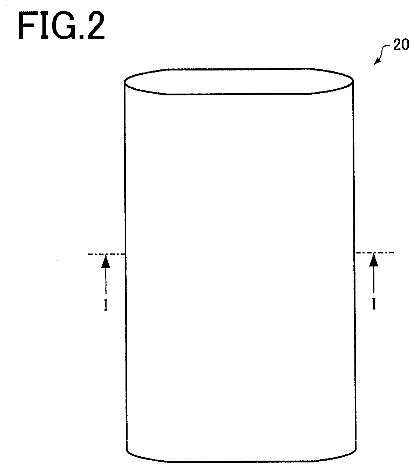

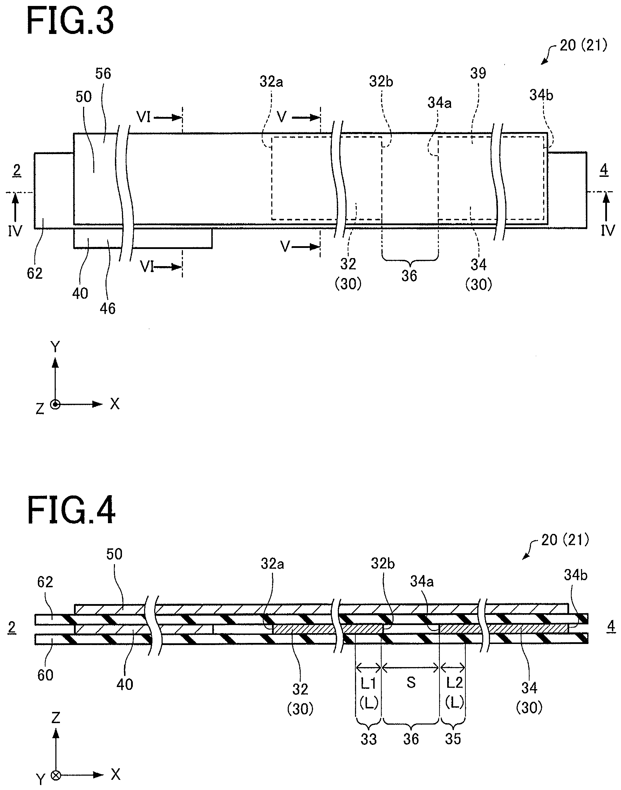

FIG. 1 is a cross-sectional view schematically illustrating a cell 100a according to the first embodiment. FIG. 2 is a perspective view schematically illustrating a wound element 20 included in the cell 100a according to the first embodiment. FIG. 3 is a plan view schematically illustrating a state in which the wound element 20 included in the cell 100a according to the first embodiment is extended (i.e., unwound state). FIGS. 4 to 6 are cross-sectional views schematically illustrating a state in which the wound element 20 included in the cell 100a according to the first embodiment is extended.

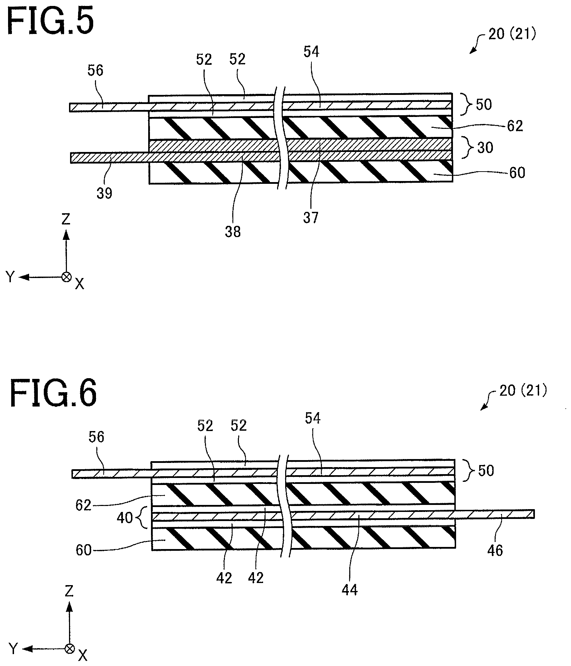

Note that FIG. 1 is a cross-sectional view taken along the line I-I illustrated in FIG. 2. FIG. 4 is a cross-sectional view taken along the line IV-IV illustrated in FIG. 3. FIG. 5 is a cross-sectional view taken along the line V-V illustrated in FIG. 3. FIG. 6 is a cross-sectional view taken along the line VI-VI illustrated in FIG. 3. In FIG. 1, a first separator 60 and a second separator 62 are omitted for convenience of illustration. The wound element 20 is illustrated in FIG. 2 in a simplified manner. In FIGS. 1 and 3 to 6, three axes that are orthogonal to each other are illustrated as "X-axis", "Y-axis", and "Z-axis" .

As illustrated in FIGS. 1 to 6, the cell 100a includes a casing 10 and the wound element 20.

As illustrated in FIG. 1, the casing 10 holds the wound element 20. The casing 10 has an approximately box-like shape in which the thickness (i.e., the dimension in the Z-axis direction) is smaller than the width (i.e., the dimension in the X-axis direction) and the length (i.e., the dimension in the Y-axis direction), for example. The casing 10 has an outer edge that includes a flat surface 12 and a curved surface 14. In the example illustrated in FIG. 1, the curved surface 14 forms an end face in the X-axis direction. The casing 10 is formed of aluminum, stainless steel, or iron, for example.

The wound element 20 is placed inside the casing 10. The wound element 20 has a shape that corresponds to the shape of the casing 10. Specifically, the wound element 20 has a flat part 22 and a curved part 24.

The flat part 22 of the wound element 20 is situated between two flat surfaces 12 of the casing 10. The flat part 22 is a part in which the surface of a lithium ion source 30 included in the wound element 20 is flat, for example. In the example illustrated in FIG. 1, the part of the lithium ion source 30 situated in the flat part 22 extends in the X-axis direction.

The curved part 24 of the wound element 20 is a part in which the surface of the lithium ion source 30 included in the wound element 20 is curved (i.e., a part having a curvature), for example. The wound element 20 has two curved parts 24. In the example illustrated in FIG. 1, a curved part 24a is situated in the +X-axis direction with respect to the flat part 22, and a curved part 24b is situated in the -X-axis direction with respect to the flat part 22.

The wound element 20 is formed by winding the lithium ion source 30, a positive electrode 40, the negative electrode 50, the first separator 60, and the second separator 62. More specifically, the wound element 20 is formed by sequentially stacking the first separator 60 to which the lithium ion source 30 is compression-bonded, the positive electrode 40, the second separator 62, and the negative electrode 50 to form a laminate 21, and winding the laminate 21 from a winding start side 2 of the laminate 21 (see FIGS. 3 and 4).

The lithium ion source 30 is situated between the first separator 60 and the second separator 62. The lithium ion source 30 is compression-bonded or bonded to the first separator 60, for example. The lithium ion source 30 is situated apart from the positive electrode 40 and the negative electrode 50. The lithium ion source 30 is situated closer to a winding end side (i.e., the side in the +X-axis direction in the example illustrated in the drawings) 4 of the laminate 21 than the winding start side (i.e., the side in the -X-axis direction in the example illustrated in the drawings) 2 of the laminate 21 in a state in which the wound element 20 is extended (see FIGS. 3 and 4). As illustrated in FIG. 1, the lithium ion source 30 (at least part of the lithium ion source 30) is situated in the wound element 20 on the outer side of the positive electrode 40 and the negative electrode 50.

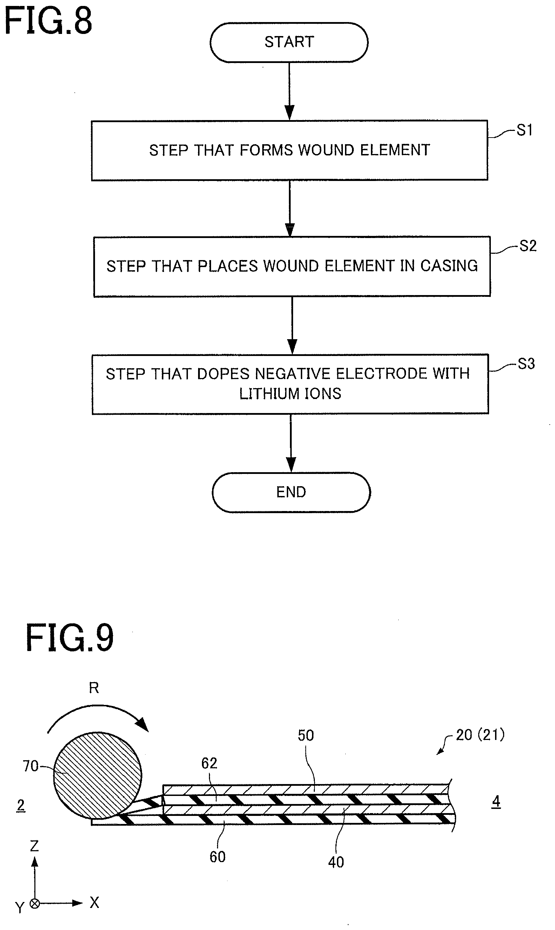

The lithium ion source 30 includes a plurality of parts that are arranged in the winding direction (i.e., a direction R illustrated in FIG. 8 described later) through a gap 36. Specifically, the lithium ion source 30 includes a first part 32 and a second part 34 that are arranged in the winding direction through the gap 36. In the example illustrated in FIGS. 3 and 4, the first part 32 and the second part 34 are sequentially arranged from the winding start side 2 toward the winding end side 4 through the gap 36. Specifically, the first part 32 is situated closer to the winding start side 2 than the second part 34.

The first part 32 and the second part 34 included in the lithium ion source 30 have a rectangular planar shape (i.e., a shape observed in the Z-axis direction in the example illustrated in the drawings) (see FIG. 3), for example. As illustrated in FIG. 4, the length S of the gap 36, and the length L of the part of the lithium ion source 30 situated in the curved part 24a in which the gap 36 is formed, satisfy the relationship "3/10≤S/(S+L)≤7/10" in a state in which the wound element 20 is extended. The length S and the length L preferably satisfy the relationship "2/5≤S/(S+L)≤3/5". The length S and the length L more preferably satisfy the relationship "S/(S+L)=1/2".

In the example illustrated in FIG. 4, the length S is the interval between the first part 32 and the second part 34 in the X-axis direction. The length L is a dimension (size) in the X-axis direction. Specifically, the length L is the total of the dimension (size) L1 of a part 33 of the first part 32 that is situated in the curved part 24a, and the dimension (size) L2 of a part 35 of the second part 34 that is situated in the curved part 24a.

The first part 32 included in the lithium ion source 30 has a first end face 32a that is situated on the winding start side 2, and a second end face 32b that is situated on the winding end side 4. The second part 34 included in the lithium ion source 30 has a third end face 34a that is situated on the winding start side 2, and a fourth end face 34b that is situated on the winding end side 4.

In the example illustrated in FIG. 1, the angle θ1 formed by an imaginary straight line P1 that passes through the second end face 32b and a point Oa, and an imaginary straight line α that passes through the point Oa and is parallel to the X-axis, is 45°. The angle θ2 formed by an imaginary straight line P2 that passes through the third end face 34a and the point Oa, and the imaginary straight line α, is 45°. Note that the point Oa is a point that is situated on a boundary line γ between the flat part 22 and the curved part 24a, and situated at the center of the curved part 24a in the Z-axis direction.

Likewise, the angle θ3 formed by an imaginary straight line Q1 that passes through the first end face 32a and a point Ob, and an imaginary straight line β that passes through the point Ob and is parallel to the X-axis, is 45°. The angle θ4 formed by an imaginary straight line Q2 that passes through the fourth end face 34b and the point Ob, and the imaginary straight line β, is 45°. Note that the point Ob is a point that is situated on a boundary line δ between the flat part 22 and the curved part 24b, and situated in the -Z-axis direction with respect to the point Oa due to the asymmetrical shape of the curved part 24b.

Note that the angles θ1 to θ4 are not limited to 45°. The angles θ1 to θ4 may be an arbitrary angle that is larger than 0° and smaller than 90°.

The gap 36 between the first part 32 and the second part 34 included in the lithium ion source 30 in the winding direction is the gap between the second end face 32b and the third end face 34a. As illustrated in FIG. 1, the gap 36 is situated in the curved part 24a of the wound element 20. Specifically, the positive electrode 40 and the negative electrode 50 situated in the curved part 24a have an area that is not covered by the lithium ion source 30 due to the presence of the gap 36. The positive electrode 40 and the negative electrode 50 situated in the curved part 24b have an area that is not covered by the lithium ion source 30 since the first end face 32a is situated apart from the fourth end face 34b.

As illustrated in FIG. 5, the lithium ion source 30 includes a lithium foil 37, and a metal foil 38 that is formed of a material other than lithium. In the example illustrated in FIG. 5, the metal foil 38 is situated on the side of the first separator 60. Note that the lithium foil 37 may be situated on the side of the first separator 60. The lithium foil 37 may be provided on each side of the metal foil 38 (not illustrated in the drawings). The lithium foil 37 is compression-bonded to the metal foil 38, for example.

The metal foil 38 included in the lithium ion source 30 has an independent part 39 to which the lithium foil 37 is not compression-bonded. As illustrated in FIG. 3, the independent part 39 is situated on the outer side of the outer edge of the separators 60 and 62 in a plan view (when viewed in the Z-axis direction) when the first separator 60, the lithium ion source 30, and the second separator 62 are stacked.

The lithium ion source 30 functions as a source that supplies lithium ions. Specifically, when the wound element 20 illustrated in FIG. 1 is immersed in the electrolyte solution in a state in which the lithium ion source 30 (i.e., independent part 39) and the negative electrode 50 (i.e., uncoated part 56) are electrically connected (short-circuited), the lithium foil 37 is dissolved in the electrolyte solution to produce lithium ions. The negative electrode 50 (i.e., negative electrode active material layer 52) is electrochemically doped with the lithium ions through the electrolyte solution. The potential of the negative electrode 50 thus decreases.

The size of the lithium ion source 30 (i.e., the size of the lithium foil 37) is appropriately determined taking account of the amount of lithium ions with which the negative electrode 50 is pre-doped. The thickness of the lithium foil 37 is not particularly limited. For example, the thickness of the lithium foil 37 is 50 to 300 micrometers. A porous metal foil is used as the metal foil 38. Specifically, the negative electrode 50 is doped with the lithium ions that have passed through the metal foil 38. The metal foil 38 is formed of copper or stainless steel, for example. The thickness of the metal foil 38 is not particularly limited. For example, the thickness of the metal foil 38 is 10 to 200 micrometers.

As illustrated in FIG. 1, the positive electrode 40 is situated in the wound element 20 on the inner side of the lithium ion source 30. The positive electrode 40 is situated between the first separator 60 and the second separator 62. As illustrated in FIGS. 3 and 4, the positive electrode 40 is situated closer to the winding start side 2 than the lithium ion source 30 in a state in which the wound element 20 is extended. The positive electrode 40 is formed in the shape of a strip. As illustrated in FIG. 6, the positive electrode 40 includes a positive electrode active material layer 42 and a positive electrode current collector 44.

The positive electrode active material layer 42 is provided on the positive electrode current collector 44. In the example illustrated in FIG. 6, the positive electrode active material layer 42 is provided on each side of the positive electrode current collector 44. Note that the positive electrode active material layer 42 may be provided on only one side of the positive electrode current collector 44. A material that can form an electrical double layer in the vicinity of the interface between the electrolyte solution and the positive electrode active material layer 42 is used as a material for forming the positive electrode active material layer 42. Specific examples of the material for forming the positive electrode active material layer 42 include activated carbon, an electroconductive polymer, and a polyacenic organic semiconductor (PAS) that has a polyacenic skeleton and is obtained by heating an aromatic condensed (fused) polymer.

A porous metal foil is used as the positive electrode current collector 44. Specifically, the negative electrode active material layer 52 is doped with the lithium ions that have passed through the positive electrode current collector 44 when the wound element 20 illustrated in FIG. 1 is formed. The positive electrode current collector 44 is formed of aluminum, for example. The thickness of the positive electrode current collector 44 is not particularly limited. For example, the thickness of the positive electrode current collector 44 is 10 to 50 micrometers.

The positive electrode current collector 44 has the uncoated part 46 on which the positive electrode active material layer 42 is not provided. As illustrated in FIG. 3, the uncoated part 46 is situated on the outer side of the outer edge of the separators 60 and 62 in a plan view when the first separator 60, the positive electrode 40, and the second separator 62 are stacked. The uncoated part 46 is electrically connected to the positive electrode terminal of an electrical storage device 100 through a lead (not illustrated in the drawings) when the wound element 20 illustrated in FIG. 1 is formed.

As illustrated in FIG. 1, the negative electrode 50 is situated in the wound element 20 on the inner side of the lithium ion source 30. As illustrated in FIGS. 3 and 4, the negative electrode 50 is situated in the +Z-axis direction side with respect to the second separator 62 in a state in which the wound element 20 is extended. The negative electrode 50 is formed in the shape of a strip. As illustrated in FIG. 6, the negative electrode 50 includes a negative electrode active material layer 52 and a negative electrode current collector 54.

The negative electrode active material layer 52 is provided on the negative electrode current collector 54. In the example illustrated in FIG. 6, the negative electrode active material layer 52 is provided on each side of the negative electrode current collector 54. Note that the negative electrode active material layer 52 may be provided on only one side of the negative electrode current collector 54. A carbon material that can occlude and release lithium ions is used as a material for forming the negative electrode active material layer 52. Specific examples of the material for forming the negative electrode active material layer 52 include graphite, non-graphitizable carbon, and PAS.

A porous metal foil is used as the negative electrode current collector 54. Specifically, the negative electrode active material layer 52 is doped with the lithium ions that have passed through the negative electrode current collector 54 when the wound element 20 illustrated in FIG. 1 is formed. The negative electrode current collector 54 is formed of copper, stainless steel, or nickel, for example. The thickness of the negative electrode current collector 54 is not particularly limited. For example, the thickness of the negative electrode current collector 54 is 20 to 50 micrometers.

The negative electrode current collector 54 has an uncoated part 56 on which the negative electrode active material layer 52 is not provided. As illustrated in FIG. 3, the uncoated part 56 is situated on the outer side of the outer edge of the separators 60 and 62 in a plan view when the first separator 60, the second separator 62, and the negative electrode 50 are stacked. The uncoated part 56 is electrically connected to the negative electrode terminal of the electrical storage device 100 through a lead (not illustrated in the drawings) when the wound element 20 illustrated in FIG. 1 is formed. The uncoated part 56 is also electrically connected to the independent part 39 of the lithium ion source 30 through a conductive member (not illustrated in the drawings) when the wound element 20 is formed.

The first separator 60 and the second separator 62 are formed in the shape of a strip. A porous material that exhibits durability with respect to the electrolyte solution and the active material layers 42 and 52 is used as a material for forming the separators 60 and 62. More specifically, a nonwoven fabric formed of cellulose, polyethylene, polypropylene, an aramid resin, an amide-imide, polyphenylene sulfide, a polyimide, or the like, a porous film, or the like is used as the separators 60 and 62. The thickness of the separators 60 and 62 is not particularly limited. For example, the thickness of the separators 60 and 62 is 15 to 50 micrometers. The separators 60 and 62 are situated between the positive electrode 40 and the negative electrode 50, and isolate the positive electrode 40 and the negative electrode 50 when the wound element 20 illustrated in FIG. 1 is formed. The separators 60 and 62 allow the electrolyte solution to pass through.

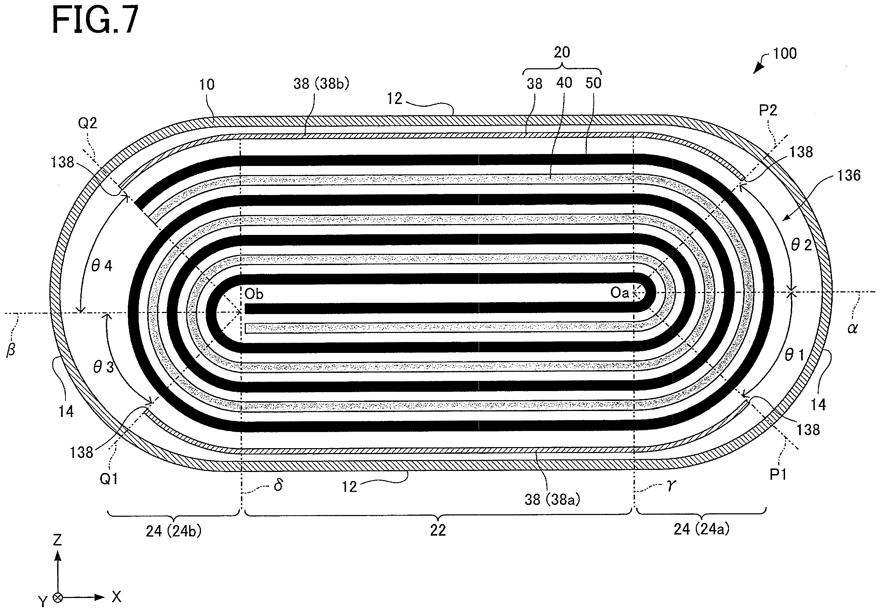

The electrical storage device 100 is described below with reference to the drawings. FIG. 7 is a cross-sectional view schematically illustrating the electrical storage device 100, and corresponds to FIG. 1. The electrical storage device 100 is formed by doping the negative electrode 50 with the lithium ions released from the lithium ion source 30 within a cell 101. More specifically, the electrical storage device 100 is formed by placing the wound element 20 in the casing 10, and injecting the electrolyte solution into the casing 10 to effect pre-doping.

Specifically, the electrical storage device 100 is formed by immersing the wound element 20 in the electrolyte solution within the cell 101 so that the lithium foil 37 included in the lithium ion source 30 is dissolved in the electrolyte solution to produce lithium ions, with which the negative electrode 50 is pre-doped.

As illustrated in FIG. 7, the electrical storage device 100 includes the wound element 20 that is formed by winding the positive electrode 40, the negative electrode 50, and the metal foil 38. The metal foil 38 (at least part of the metal foil 38) is situated on the outer side of the positive electrode 40 and the negative electrode 50.

The metal foil 38 included in the electrical storage device 100 includes a plurality of parts (first part 38a and second part 38b) that are arranged in the winding direction through a gap 136 in the same manner as the lithium ion source 30. The gap 136 is situated in the curved part 24a of the wound element 20. Specifically, an end (edge) 138 of the metal foil 38 is situated in the curved part 24a, and is not situated in the flat part 22 of the wound element 20.

The casing 10 included in the electrical storage device 100 holds the electrolyte solution (not illustrated in the drawings). A non-aqueous electrolyte solution is used as the electrolyte solution. Examples of the solvent used to prepare the electrolyte solution include ethylene carbonate, propylene carbonate, dimethyl carbonate, diethyl carbonate, γ-butyrolactone, acetonitrile, dimethoxyethane, tetrahydrofuran, dioxolane, methylene chloride, sulfolane, and the like. These solvents may be used either alone or in combination.

A lithium salt may be used as the electrolyte used to prepare the electrolyte solution. Specific examples of the electrolyte include LiClO₄, LiAsF₆, LiBF₄, LiPF₆, Li(C₂F₅SO₂)₂N, and the like. The concentration of the electrolyte in the electrolyte solution is 0.5 to 1.5 mol/L, for example.

The electrical storage device 100 has the following features, for example.

The negative electrode 50 is uniformly doped with lithium ions. The details thereof are described later.

The end (edge) 138 of the metal foil is situated in the curved part 24 of the wound element 20. Therefore, a local pressure is not applied to the wound element 20 even if pressure is applied to the electrical storage device 100 in the widthwise direction (Z-axis direction) during use. This makes occurrence of precipitation of dendrites difficult, and the lifetime of the electrical storage device 100 is increased.

For example, since the cell size of the electrical storage device 100 may change due to repeated charge and discharge, the electrical storage device 100 is normally used in a state in which pressure is applied to the electrical storage device 100 in the widthwise direction (Z-axis direction) in order to maintain the cell size. If the end (edge) of the metal foil is situated in the flat part of the wound element, a local decrease in resistance may occur at the position of the end (edge) of the metal foil. In this case, the transfer of lithium ions may locally increase at the position of the end (edge) of the metal foil, and precipitation of dendrites may easily occur.

Although an example in which the electrical storage device 100 is a lithium-ion capacitor has been described above, the electrical storage device 100 may be a lithium-ion secondary battery.

### 1.2. Method for producing electrical storage device

A method for producing the electrical storage device according to the first embodiment is described below with reference to the drawings. FIG. 8 is a flowchart illustrating the method for producing the electrical storage device 100 according to the first embodiment. FIG. 9 is a cross-sectional view schematically illustrating a production step that produces the electrical storage device 100 according to the first embodiment.

As illustrated in FIG. 8, the method for producing the electrical storage device 100 includes a step (S1) that forms the wound element 20, a step (S2) that places the wound element 20 in the casing 10, and a step (S3) that dopes the negative electrode 50 with lithium ions.

As illustrated in FIG. 1, the positive electrode 40, the negative electrode 50, and the lithium ion source 30 that includes a plurality of parts (first part 32 and second part 34) that are arranged in the winding direction through the gap 36, are wound to form the wound element 20 that has the flat part 22 and the curved part 24 (S1). In the step S1, the wound element 20 is formed so that the lithium ion source 30 is situated on the outer side of the positive electrode 40 and the negative electrode 50. In the step S1, the wound element 20 is formed so that the gap 36 is situated in the curved part 24.

More specifically, the first separator 60 to which the lithium ion source 30 is compression-bonded, the positive electrode 40, the second separator 62, and the negative electrode 50 are sequentially stacked to form the laminate 21 (see FIG. 4). As illustrated in FIG. 9, a core rod 70 is placed on the winding start side 2 of the laminate 21, and rotated in the arrow direction R (winding direction R) to form a wound element having an approximately circular cross-sectional shape (not illustrated in the drawings). The wound element having an approximately circular cross-sectional shape is secured using a tape (not illustrated in the drawings) or the like, and the core rod 70 is removed. The independent part 39 of the lithium ion source 30 and the uncoated part 56 of the negative electrode 50 are short-circuited using a conductive member (not illustrated in the drawings). In the example illustrated in FIG. 9, the core rod 70 has a columnar shape. The core rod 70 is formed of a metal material (e.g., stainless steel, copper, or nickel) or a resin (e.g., polypropylene or polyphenylene sulfide), for example. Note that the core rod 70 may not be removed, and maybe allowed to remain.

The wound element having an approximately circular cross-sectional shape is deformed to have the flat part 22 and the curved part 24 (see FIG. 1) to form the wound element 20. The wound element 20 is formed so that the gap 36 is situated in the curved part 24 of the wound element 20. More specifically, the wound element having an approximately circular cross-sectional shape is pressurized using a molding device or the like to form the wound element 20 that has the flat part 22 and the curved part 24.

Note that the wound element 20 that has the flat part 22 and the curved part 24 may be formed by winding the laminate 21 using the core rod 70 having the desired shape (e.g., cylindrical shape having a flat part) (not illustrated in the drawings).

The wound element 20 is then placed in the casing 10 (S2). The wound element 20 is placed in the casing 10 using a known method, for example. The cell 100a is thus formed.

The negative electrode 50 is then doped with lithium ions released from the lithium ion source 30 (S3). More specifically, the electrolyte solution is injected into the casing 10 to immerse the wound element 20 in the electrolyte solution. Lithium ions are thus released from the lithium foil 37 included in the lithium ion source 30, and the negative electrode active material layer 52 is doped with the lithium ions. Note that the wound element 20 may be immersed in the electrolyte solution by placing the wound element 20 in the casing 10 that holds the electrolyte solution.

The casing 10 is then sealed.

Note that the positive electrode 40 and the negative electrode 50 are formed by providing (applying) the active material layers 42 and 52 to each side of the collectors 44 and 54, respectively. The active material layers 42 and 52 may be formed as follows. Specifically, an active material powder (e.g., activated carbon or graphite) and a binder are dispersed in an aqueous medium or an organic solvent to prepare a slurry. A conductive powder may optionally be mixed into the slurry. The slurry is applied to the surface of the collectors 44 and 54, and dried. The active material layers 42 and 52 can thus be obtained.

Examples of the binder used to prepare the slurry include a rubber binder (e.g., styrene-butadiene rubber (SBR)), a fluororesin (e.g., polytetrafluoroethylene and polyvinylidene fluoride), a thermoplastic resin (e.g., polypropylene and polyethylene), and the like. Examples of the conductive powder that may optionally be mixed into the slurry include acetylene black, graphite, a metal powder, and the like.

The electrical storage device 100 illustrated in FIG. 7 can be produced by the above steps.

The method for producing the electrical storage device 100 has the following features, for example.

The method for producing the electrical storage device 100 forms the wound element 20 so that the gap 36 is situated in the curved part 24. This makes it possible to suppress a situation in which the part of the negative electrode 50 situated in the curved part 24 is excessively doped with lithium ions, and ensure that the negative electrode 50 is uniformly doped with lithium ions. Therefore, it is possible to suppress a situation in which lithium dendrites precipitate within the curved part 24 of the wound element 20, and pass through the separators 60 and 62 to short-circuit the positive electrode 40 and the negative electrode 50. This makes it possible to increase the lifetime of the electrical storage device 100, and improve the reliability of the electrical storage device 100.

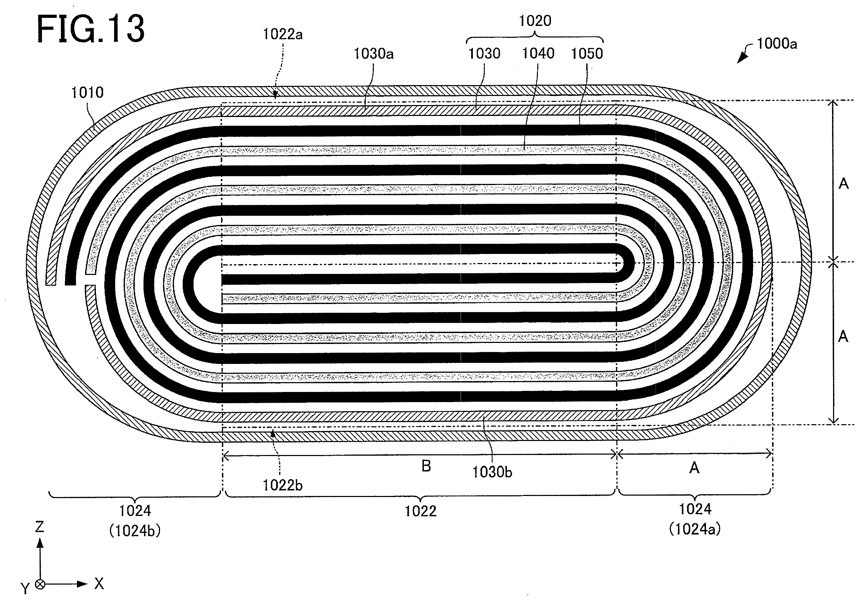

FIG. 13 is a cross-sectional view schematically illustrating a cell 1000a according to a comparative example. The cell 1000a includes a casing 1010, and a wound element 1020 that is placed in the casing 1010. The wound element 1020 includes a lithium ion source 1030, a positive electrode 1040, and a negative electrode 1050. The lithium ion source 1030 is not provided with a gap that is formed in the winding direction. The cell 1000a having such a structure has a problem in which the part of the negative electrode 1050 included in a curved part 1024 is excessively doped with lithium ions as compared to the part of the negative electrode 1050 included in a flat part 1022 for the following reasons.

As illustrated in FIG. 13, the flat part 1022 includes a first area 1022a and a second area 1022b. When the curved part 1024a has a semicircular cross-sectional shape obtained by halving a circle having a radius A, and the part of the lithium ion source 1030 situated in the flat part 1022 has a length (i.e., the dimension in the X-axis direction) B, the area (i.e., the cross-sectional area illustrated in FIG. 13) of each of the first area 1022a and the second area 1022b is A×B. Therefore, when a lithium ion source 1030a included in the first area 1022 produces lithium ions with which the part of the negative electrode 1050 included in the first area 1022 is doped, and a lithium ion source 1030b included in the second area 1022b produces lithium ions with which the part of the negative electrode 1050 included in the second area 1022b is doped, the doping target area of each of the lithium ion source 1030a and the lithium ion source 1030b is A×B. Therefore, the lithium ion doping amount corresponding to each of the lithium ion source 1030a and the lithium ion source 1030b is represented by "A" per unit length.

The part of the lithium ion source 1030 situated in the curved part 1024a produces lithium ions with which the part of the negative electrode 1050 situated in the curved part 1024a is doped. The area (i.e., the cross-sectional area illustrated in FIG. 13) of the curved part 1024a is πA²//2, and the length of the part of the lithium ion source 1030 situated in the curved part 1024a is πA. Therefore, the lithium ion doping amount corresponding to the part of the lithium ion source 1030 situated in the curved part 1024a is represented by "A/2" per unit length.

Accordingly, the lithium ion doping amount (per unit length) of the part of the negative electrode 1050 situated in the curved part 1024a is twice the lithium ion doping amount (per unit length) of the part of the negative electrode 1050 situated in the flat part 1022. Specifically, the cell 1000a (electrical storage device 1000) has a problem in which the part of the negative electrode 1050 situated in the curved part 1024a is excessively doped with lithium ions (i.e., the negative electrode 1050 cannot be uniformly doped with lithium ions).

The method for producing the electrical storage device 100 according to the first embodiment can prevent occurrence of the problem. Specifically, the method for producing the electrical storage device 100 according to the first embodiment can suppress a situation in which the part of the negative electrode 50 situated in the curved part 24 is excessively doped with lithium ions, and ensures that the negative electrode 50 is uniformly doped with lithium ions.

According to the method for producing the electrical storage device 100, the length S of the gap 36, and the length L of the part of the lithium ion source 30 situated in the curved part 24a in which the gap 36 is formed, satisfy the relationship "3/10≤S/(S+L)≤7/10", preferably satisfy the relationship "2/5≤S/(S+L)≤3/5", and more preferably satisfy the relationship "S/(S+L)=1/2", in a state in which the wound element 20 is extended. This ensures that the negative electrode 50 is more uniformly doped with lithium ions.

### 1.3. Modifications of electrical storage device

An electrical storage device according to a first modification of the first embodiment, and an electrical storage device according to a second modification of the first embodiment are described below with reference to the drawings. The electrical storage device according to the first modification of the first embodiment is formed in the same manner as the electrical storage device 100 by doping the negative electrode 50 with the lithium ions released from the lithium ion source 30 within a cell according to the first modification of the first embodiment. The electrical storage device according to the second modification of the first embodiment is formed in the same manner as the electrical storage device 100 by doping the negative electrode 50 with the lithium ions released from the lithium ion source 30 within a cell according to the second modification of the first embodiment.

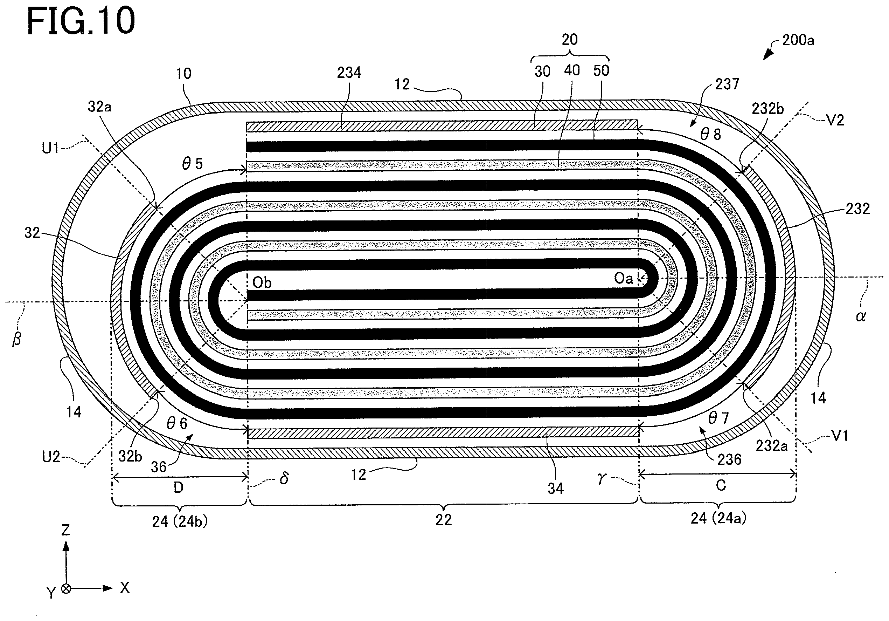

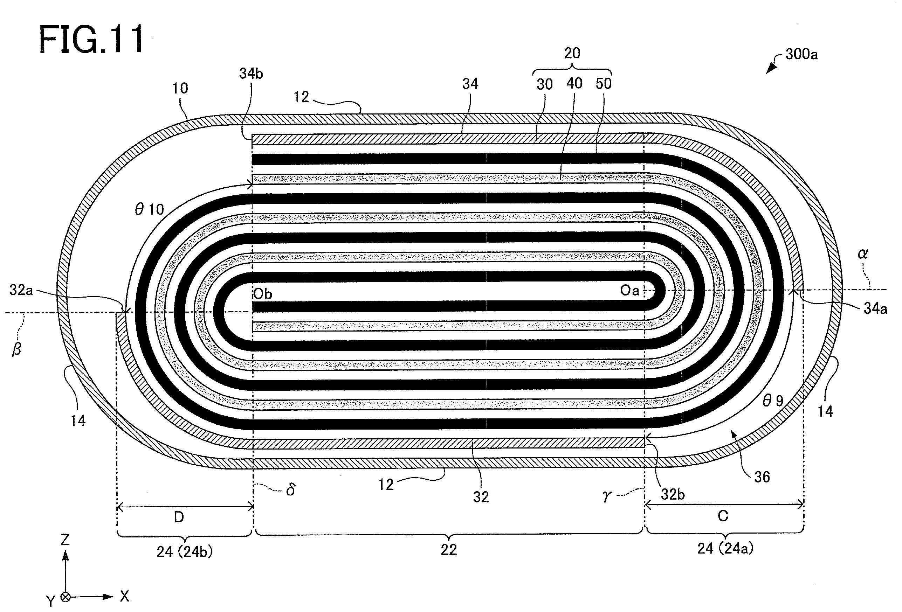

FIG. 10 is a cross-sectional view schematically illustrating a cell 200a according to the first modification of the first embodiment, and corresponds to FIG. 1. FIG. 11 is a cross-sectional view schematically illustrating a cell 300a according to the second modification of the first embodiment, and corresponds to FIG. 1. Note that the same elements as those of the cell 100a according to the first embodiment are indicated by the same reference signs, and detailed description thereof is omitted.

In FIGS. 10 and 11, the first separator 60 and the second separator 62 are omitted for convenience of illustration. In FIGS. 10 and 11, three axes that are orthogonal to each other are illustrated as "X-axis", "Y-axis", and "Z-axis".

### 1.3.1. First modification

The cell 100a has a structure in which the lithium ion source 30 includes the first part 32 and the second part 34 that are arranged in the winding direction through the gap 36 (see FIG. 1). As illustrated in FIG. 10, the cell 200a (electrical storage device 200) has a structure in which the lithium ion source 30 includes a first part 32, a second part 34, a third part 232, and a fourth part 234 that are arranged in the winding direction through a gap. The first part 32, the second part 34, the third part 232, and the fourth part 234 are sequentially arranged from the winding start side 2 toward the winding end side 4 (see FIG. 4) in a state in which the wound element 20 is extended.

As illustrated in FIG. 10, the first part 32 included in the lithium ion source 30 is situated in the curved part 24b of the wound element 20. The first part 32 has a length of πD/2 (D is the dimension of the curved part 24b in the X-axis direction) in the winding direction, for example. The first part 32 is disposed symmetrically with respect to the imaginary straight line β.

The second part 34 and the fourth part 234 included in the lithium ion source 30 are situated in the flat part 22 of the wound element 20. In the examples illustrated in FIG. 10, the second part 34 is situated in the flat part 22 in the -Z-axis direction with respect to the fourth part 234, and the fourth part 234 is situated in the flat part 22 in the +Z-axis direction with respect to the second part 34.

The third part 232 included in the lithium ion source 30 is situated in the curved part 24a of the wound element 20. The third part 232 has a length of πC/2 (C is the dimension of the curved part 24a in the X-axis direction) in the winding direction, for example. The third part 232 is disposed symmetrically with respect to the imaginary straight line α.

A gap 36 formed between the first part 32 and the second part 34 in the winding direction is situated in the curved part 24b. Specifically, the positive electrode 40 and the negative electrode 50 situated in the curved part 24b have an area that is not covered by the lithium ion source 30 due to the presence of the gap 36. The positive electrode 40 and the negative electrode 50 situated in the curved part 24b have an area that is not covered by the lithium ion source 30 since the first part 32 is situated apart from the fourth part 234.

A gap 236 formed between the second part 34 and the third part 232 in the winding direction is situated in the curved part 24a. A gap 237 formed between the third part 232 and the fourth part 234 in the winding direction is situated in the curved part 24a. Specifically, the positive electrode 40 and the negative electrode 50 situated in the curved part 24b have an area that is not covered by the lithium ion source 30 due to the presence of the gaps 236 and 237.

The angle θ5 formed by an imaginary straight line U1 that passes through a first end face 32a of the first part 32 on the winding start side 2 and the point Ob, and the boundary line δ, is 45°. The angle θ6 formed by an imaginary straight line U2 that passes through a second end face 32b of the first part 32 on the winding end side 4 and the point Ob, and the boundary line δ, is 45°. The angle θ7 formed by an imaginary straight line VI that passes through a fifth end face 232a of the third part 232 on the winding start side 2 and the point Oa, and the boundary line γ, is 45°. The angle θ8 formed by an imaginary straight line V2 that passes through a sixth end face 232b of the third part 232 on the winding end side 4 and the point Oa, and the boundary line γ, is 45°.

Note that the length of the first part 32, the second part 34, the third part 232, and the fourth part 234 in the winding direction is not particularly limited as long as the first part 32, the second part 34, the third part 232, and the fourth part are situated apart from each other. The angles θ5 to θ8 are not limited to 45°. The angles θ5 to θ8 may be an arbitrary angle that is larger than 0° and smaller than 90°.

### 1.3.2. Second modification

The electrical storage device 100 has a structure in which the first end face 32a of the first part 32 included in the lithium ion source 30 is situated along the imaginary straight line Q1 that forms an angle of 45° with the imaginary straight line β, and the second end face 32b of the first part 32 included in the lithium ion source 30 is situated along the imaginary straight line P1 that forms an angle of 45° with the imaginary straight line α (see FIG. 1). The third end face 34a of the second part 34 included in the lithium ion source 30 is situated along the imaginary straight line P2 that forms an angle of 45° with the imaginary straight line α, and the fourth end face 34b of the second part 34 included in the lithium ion source 30 is situated along the imaginary straight line Q2 that forms an angle of 45° with the imaginary straight line β.

As illustrated in FIG. 11, the cell 300a (electrical storage device 300) has a structure in which the first end face 32a of the first part 32 is situated along the imaginary straight line β, and the second end face 32b of the first part 32 is situated along the imaginary straight line γ. The first part 32 situated in the curved part 24b has a length of piD/2 (D is the dimension of the curved part 24b in the X-axis direction) in the winding direction, for example.

The third end face 34a of the second part 34 is situated along the imaginary straight line α, and the fourth end face 34b of the second part 34 is situated along the imaginary straight line δ. The second part 34 situated in the curved part 24b has a length of πC/2 (C is the dimension of the curved part 24a in the X-axis direction) in the winding direction, for example.

The angle θ9 formed by the boundary line γ that passes through the second end face 32b of the first part 32 on the winding end side 4 and the point Oa, and the imaginary straight line α that passes through the third end face 34a of the second part 34 on the winding start side 2 and the point Oa, is 90°. The angle θ10 formed by the imaginary straight line β that passes through the first end face 32a of the first part 32 on the winding start side 2 and the point Ob, and the boundary line δ that passes through the fourth end face 34b of the second part 34 on the winding end side 4 and the point Ob, is 90°.

### 2. Second embodiment

### 2.1. Electrical storage device

An electrical storage device according to a second embodiment of the invention is described below with reference to the drawings. The electrical storage device according to the second embodiment is formed in the same manner as the electrical storage device 100 by doping the negative electrode 50 with the lithium ions released from the lithium ion source 30 within a cell according to the second embodiment.

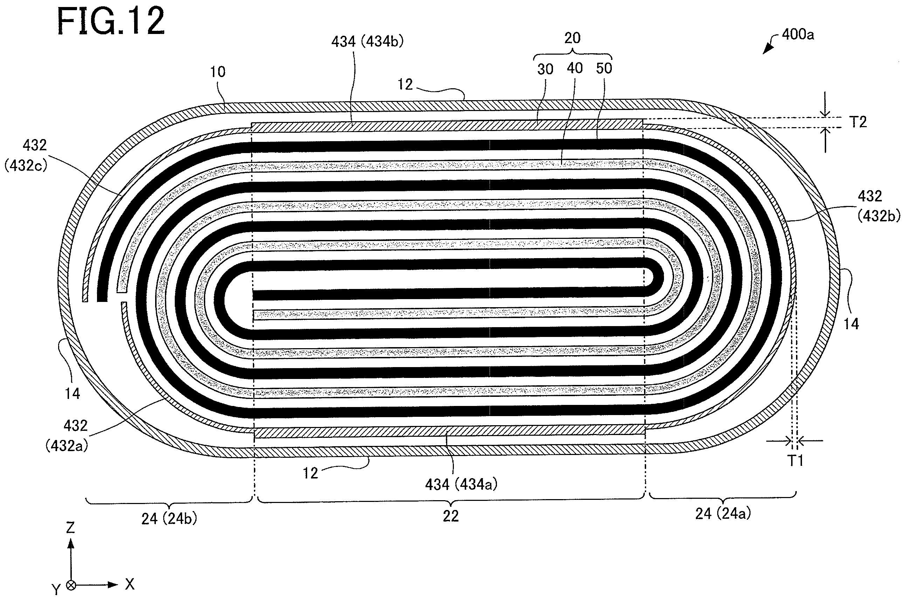

FIG. 12 is a cross-sectional view schematically illustrating a cell 400a according to the second embodiment, and corresponds to FIG. 1. Note that the same elements as those of the cell 100a according to the first embodiment are indicated by the same reference signs, and detailed description thereof is omitted.

In FIG. 12, the first separator 60 and the second separator 62 are omitted for convenience of illustration. In FIG. 12, three axes that are orthogonal to each other are illustrated as "X-axis", "Y-axis", and "Z-axis".

The cell 100a has a structure in which the lithium ion source 30 includes the first part 32 and the second part 34 that are arranged in the winding direction through the gap 36 (see FIG. 1). As illustrated in FIG. 12, the cell 400a has a structure in which the lithium ion source 30 includes a thin part 432 and a thick part 434 that are arranged in the winding direction. For example, the cell 400a (electrical storage device 400) has a structure in which a thin part 432a, a thick part 434a, a thin part 432b, a thick part 434b, and a thin part 432c are sequentially arranged from the winding start side 2 toward the winding end side 4 (see FIG. 4) in a state in which the wound element 20 is extended.

The thin part 432 has a thickness smaller than that of the thick part 434. The thin part 432 is situated in the curved part 24. In the example illustrated in FIG. 12, the thin parts 432a and 432c are situated in the curved part 24b, and the thin part 432b is situated in the curved part 24a. The thick part 434 is situated in the flat part 22.

The thickness T1 of the thin part 432 and the thickness T2 of the thick part 434 satisfy the relationship "3/10≤T1/T2≤7/10". The thickness T1 and the thickness T2 preferably satisfy the relationship "2/5≤T1/T2≤3/5". The thickness T1 and the thickness T2 more preferably satisfy the relationship "T1/T2=1/2".

### 2.2. Method for producing electrical storage device

A method for producing the electrical storage device according to the second embodiment is described below. The method for producing the electrical storage device 400 according to the second embodiment is basically the same as the method for producing the electrical storage device 100 according to the first embodiment, except that the positive electrode 40, the negative electrode 50, and the lithium ion source 30 that includes the thin part 432 and the thick part 434 that are arranged in the winding direction, are wound to form the wound element 20 so that the thin part 432 is situated in the curved part 24. Therefore, detailed description of thereof is omitted.

Note that the lithium ion source 30 that includes the thin part 432 and the thick part 434 may be formed by providing a lithium ion source having a given thickness, and etching the part of the lithium ion source that corresponds to the thin part, or may be formed by bonding lithium ion sources that differ in thickness.

The method for producing the electrical storage device 400 ensures that the negative electrode 50 is uniformly doped with lithium ions in the same manner as the method for producing the electrical storage device 100.

The method for producing the electrical storage device 400 ensures that the negative electrode 50 is more uniformly doped with lithium ions when the thickness T1 of the thin part 432 and the thickness T2 of the thick part 434 satisfy the above relationship.

The invention is not limited to the above embodiments, and various modifications and variations may be made of the above embodiments. The embodiments and the modifications thereof may be appropriately combined.

The invention is not limited to the above embodiments, and various modifications and variations may be made. The invention includes various other configurations substantially the same as the configurations described in connection with the above embodiments (such as a configuration having the same function, method, and results, or a configuration having the same objective and results). The invention also includes configurations in which an unsubstantial part described in connection with the above embodiments is replaced with another part. The invention also includes a configuration having the same effects as those of the configurations described in connection with the above embodiments, or a configuration capable of achieving the same objective as that of the configurations described in connection with the above embodiments.

### REFERENCE SIGNS LIST

2: winding start side, 4: winding end side, 10: casing, 12: flat surface, 14: curved surface, 20: wound element, 21: laminate, 22: flat part, 24: curved part, 30: lithium ion source, 32: first part, 32a: first end face, 32b: second end face, 33: part included in curved part, 34: second part, 34a: third end face, 34b: fourth end face, 35: part included in curved part, 36: gap, 37: lithium foil, 38: metal foil, 39: independent part, 40: positive electrode, 42: positive electrode active material layer, 44: positive electrode current collector, 46: uncoated part, 50: negative electrode, 52: negative electrode active material layer, 54: negative electrode current collector, 56: uncoated part, 60: first separator, 62: second separator, 70: core rod, 100: electrical storage device, 100a: cell, 136: gap, 138: end, 200a: cell, 232: third section, 232a: fifth end face, 232b: sixth end face, 234: fourth part, 236: gap, 237: gap, 300a: cell, 400: electrical storage device, 400a: cell, 432: thin part, 434: thick part, 1000a: cell, 1010: casing, 1020: wound element, 1022: flat part, 1024: curved part, 1030: lithium ion source, 1040: positive electrode, 1050: negative electrode

## Claims

1. A method for producing an electrical storage device (100, 100a, 200a, 300a) comprising:
winding a positive electrode (40) that includes a positive electrode active material layer (42) and a positive electrode current collector (44), a negative electrode (50) that includes a negative electrode active material layer (52) and a negative electrode current collector (54), and a lithium ion source (30) to form a wound element (20) that has a flat part (22) and a curved part (24), the lithium ion source (30) including a plurality of parts (32, 34) that are arranged in a winding direction through a gap (36),
the wound element (20) being formed so that the gap (36) is situated in the curved part (24), and
a length S of the gap (36), and a length L of a part of the lithium ion source (30) situated in the curved part (24) in which the gap (36) is formed, satisfying a relationship "3/10≤S/(S+L)≤7/10" in a state in which the wound element (20) is extended.

2. The method for producing an electrical storage device (100, 100a, 200a, 300a) according to claim 1,
wherein the wound element (20) is formed so that at least part of the lithium ion source (30) is situated on an outer side of the positive electrode (40) and the negative electrode (50).

3. A method for producing an electrical storage device (400a) according to claim 1 comprising:
winding a positive electrode (40) that includes a positive electrode active material layer (42) and a positive electrode current collector (44), a negative electrode (50) that includes a negative electrode active material layer (52) and a negative electrode current collector (54), and a lithium ion source (30) to form a wound element (20) that has a flat part (22) and a curved part (24), the lithium ion source (30) including a thin part (432) and a thick part (434) that are arranged in a winding direction,
the wound element (20) being formed so that the thin part is situated in the curved part.

4. The method for producing an electrical storage device (400a) according to claim 3,
wherein the wound element (20) is formed so that at least part of the lithium ion source (30) is situated on an outer side of the positive electrode (40) and the negative electrode (50).

5. The method for producing an electrical storage device (400a) according to claim 3 or 4,
wherein a thickness T1 of the thin part (432) and a thickness T2 of the thick part (434) satisfy a relationship "3/10≤T1/T2≤7/10".

6. The method for producing an electrical storage device (100, 100a, 200a, 300a, 400a) according to any one of claims 1 to 5, further comprising:
placing the wound element (20) in a casing (12).

7. The method for producing an electrical storage device (100, 100a, 200a, 300a, 400a) according to any one of claims 1 to 6, further comprising:
doping the negative electrode (50) with lithium ions released from the lithium ion source (30).

8. The method for producing an electrical storage device (100, 100a, 200a, 300a, 400a) according to any one of claims 1 to 7,
wherein a separator (60, 62) is placed between the positive electrode (40) and the negative electrode (50) when forming the wound element (20).

9. The method for producing an electrical storage device (100, 100a, 200a, 300a, 400a) according to any one of claims 1 to 8, the method producing a lithium-ion capacitor as the electrical storage device (100, 100a, 200a, 300a, 400a).

10. An electrical storage device (100) obtained by the method of claim 1 or 3 comprising:
a wound element (20) that is formed by winding a positive electrode (40) that includes a positive electrode active material layer (42) and a positive electrode current collector (44), a negative electrode (50) that includes a negative electrode active material layer (52) and a negative electrode current collector (54), and a metal foil (38), the metal foil (38) including a plurality of parts (38a, 38b) that are arranged in a winding direction through a gap (136),
the wound element (20) having a flat part (22) and a curved part (24),
the gap (136) being situated in the curved part (24), and
an end (138) of the metal foil (38) being situated in the curved part (24).

11. The electrical storage device (100) according to claim 10,
wherein at least part of the metal foil (38) is situated on an outer side of the positive electrode (40) and the negative electrode (50).

## Patentansprüche

1. Verfahren zum Herstellen einer elektrischen Speichervorrichtung (100, 100a, 200a, 300a), das Folgendes aufweist:
Wickeln einer positiven Elektrode (40), die eine positive Elektrodenaktivmaterialschicht (42) und einen positiven Elektrodenstromabnehmer (44) aufweist, einer negativen Elektrode (50), die eine negative Elektrodenaktivmaterialschicht (52) und einen negativen Elektrodenstromabnehmer (54) aufweist, und einer Lithiumionenquelle (30), um ein gewickeltes Element (20) auszubilden, das einen flachen Teil (22) und einen gekrümmten Teil (24) hat, wobei die Lithiumionenquelle (30) eine Vielzahl von Teilen (32, 34) aufweist, die in einer Wicklungsrichtung durch einen Zwischenraum (36) angeordnet sind, wobei
das gewickelte Element (20) so ausgebildet wird, dass der Zwischenraum (36) in dem gekrümmten Teil (24) angeordnet ist, und
eine Länge S des Zwischenraums (36) und eine Länge L eines Teils der Lithiumionenquelle (30), die in dem gekrümmten Teil (24) angeordnet ist, in dem der Zwischenraum (36) ausgebildet ist, ein Verhältnis "3/10 ≤ S/(S+L) ≤ 7/10" in einem Zustand erfüllen, in dem das gewickelte Element (20) erstreckt ist.

2. Verfahren zum Herstellen einer elektrischen Speichervorrichtung (100, 100a, 200a, 300a) nach Anspruch 1,
wobei das gewickelte Element (20) so ausgebildet ist, dass zumindest ein Teil der Lithiumionenquelle (30) an einer Außenseite der positiven Elektrode (40) und der negativen Elektrode (50) angeordnet ist.

3. Verfahren zum Herstellen einer elektrischen Speichervorrichtung (400a) nach Anspruch 1, das Folgendes aufweist:
Wickeln einer positiven Elektrode (40), die eine positive Elektrodenaktivmaterialschicht (42) und einen positiven Elektrodenstromabnehmer (44) aufweist, einer negativen Elektrode (50), die eine negative Elektrodenaktivmaterialschicht (52) und einen negativen Elektrodenstromabnehmer (54) aufweist, und einer Lithiumionenquelle (30), um ein gewickeltes Element (20) auszubilden, das einen flachen Teil (22) und einen gekrümmten Teil (24) hat, wobei die Lithiumionenquelle (30) einen dünnen Teil (432) und einen dicken Teil (434) aufweist, die in einer Wicklungsrichtung angeordnet sind, wobei
das gewickelte Element (20) so ausgebildet ist, dass der dünne Teil in dem gekrümmten Teil angeordnet ist.

4. Verfahren zum Herstellen einer elektrischen Speichervorrichtung (400a) nach Anspruch 3,
wobei das gewickelte Element (20) so ausgebildet ist, dass zumindest ein Teil der Lithiumionenquelle (30) an einer Außenseite der positiven Elektrode (40) und der negativen Elektrode (50) angeordnet ist.

5. Verfahren zum Herstellen einer elektrischen Speichervorrichtung (400a) nach Anspruch 3 oder 4,
wobei eine Dicke T1 des dünnen Teils (432) und eine Dicke T2 des dicken Teils (434) ein Verhältnis "3/10 ≤ T1/T2 ≤ 7/10" erfüllen.

6. Verfahren zum Herstellen einer elektrischen Speichervorrichtung (100, 100a, 200a, 300a, 400a) nach einem der Ansprüche 1 bis 5, das des Weiteren Folgendes aufweist:
Anordnen des gewickelten Elements (20) in einem Gehäuse (12).

7. Verfahren zum Herstellen einer elektrischen Speichervorrichtung (100, 100a, 200a, 300a, 400a) nach einem der Ansprüche 1 bis 6, das des Weiteren Folgendes aufweist:
Dotieren der negativen Elektrode (50) mit Lithiumionen, die von der Lithiumionenquelle (30) freigegeben werden.

8. Verfahren zum Herstellen einer elektrischen Speichervorrichtung (100, 100a, 200a, 300a, 400a) nach einem der Ansprüche 1 bis 7,
wobei ein Separator (60, 62) zwischen der positiven Elektrode (40) und der negativen Elektrode (50) angeordnet wird, wenn das gewickelte Element (20) ausgebildet wird.

9. Verfahren zum Herstellen einer elektrischen Speichervorrichtung (100, 100a, 200a, 300a, 400a) nach einem der Ansprüche 1 bis 8, wobei das Verfahren einen Lithiumionenkondensator als die elektrische Speichervorrichtung (100, 100a, 200a, 300a, 400a) herstellt.

10. Elektrische Speichervorrichtung (100), die durch das Verfahren nach Anspruch 1 oder 3 erhalten wird, und Folgendes aufweist:
ein gewickeltes Element (20), das durch Wickeln einer positiven Elektrode (40), die eine positive Elektrodenaktivmaterialschicht (42) und einen positiven Elektrodenstromabnehmer (44) aufweist, einer negativen Elektrode (50), die eine negative Elektrodenaktivmaterialschicht (52) und einen negativen Elektrodenstromabnehmer (54) aufweist, und einer Metallfolie (38) ausgebildet ist, wobei die Metallfolie (38) eine Vielzahl von Teilen (38a, 38b) aufweist, die in einer Wicklungsrichtung durch einen Zwischenraum (136) angeordnet sind, wobei
das gewickelte Element (20) einen flachen Teil (22) und einen gekrümmten Teil (24) hat,
der Zwischenraum (136) in dem gekrümmten Teil (24) angeordnet ist, und
ein Ende (138) der Metallfolie (38) in dem gekrümmten Teil (24) angeordnet ist.

11. Elektrische Speichervorrichtung (100) nach Anspruch 10,
wobei zumindest ein Teil der Metallfolie (38) an einer Außenseite der positiven Elektrode (40) und der negativen Elektrode (50) angeordnet ist.

## Revendications

1. Procédé pour produire un dispositif de stockage électrique (100, 100a, 200a, 300a) qui comprend :
l'enroulement d'une électrode positive (40) qui comprend une couche de matériau actif d'électrode positive (42) et un collecteur de courant d'électrode positive (44), d'une électrode négative (50) qui comprend une couche de matériau actif d'électrode négative (52) et un collecteur de courant d'électrode négative (54), et d'une source lithium-ion (30) pour former un élément enroulé (20) qui comporte une partie plate (22) et une partie incurvée (24), dans lequel la source lithium-ion (30) comprend une pluralité de parties (32, 34) qui sont agencées dans une direction d'enroulement à travers un espace (36),
dans lequel l'élément enroulé (20) est formé de sorte que l'espace (36) soit situé dans la partie incurvée (24), et
dans lequel une longueur S de l'espace (36), et une longueur L d'une partie de la source lithium-ion (30) située dans la partie incurvée (24) dans laquelle l'espace (36) est formé, satisfont à une relation « 3/10 ≤ S/(S+L) ≤ 7/10 » dans un état dans lequel l'élément enroulé (20) est étendu.

2. Procédé pour produire un dispositif de stockage électrique (100, 100a, 200a, 300a) selon la revendication 1,
dans lequel l'élément enroulé (20) est formé de sorte qu'au moins une partie de la source lithium-ion (30) soit située d'un côté extérieur de l'électrode positive (40) et de l'électrode négative (50).

3. Procédé pour produire un dispositif de stockage électrique (400a) selon la revendication 1, qui comprend :
l'enroulement d'une électrode positive (40) qui comprend une couche de matériau actif d'électrode positive (42) et un collecteur de courant d'électrode positive (44), d'une électrode négative (50) qui comprend une couche de matériau actif d'électrode négative (52) et un collecteur de courant d'électrode négative (54), et d'une source lithium-ion (30) pour former un élément enroulé (20) qui comporte une partie plate (22) et une partie incurvée (24), dans lequel la source lithium-ion (30) comprend une partie mince (432) et une partie épaisse (434) qui sont agencées dans une direction d'enroulement,
dans lequel l'élément enroulé (20) est formé de sorte que la partie mince soit située dans la partie incurvée.

4. Procédé pour produire un dispositif de stockage électrique (400a) selon la revendication 3,
dans lequel l'élément enroulé (20) est formé de sorte qu'au moins une partie de la source lithium-ion (30) soit située d'un côté extérieur de l'électrode positive (40) et de l'électrode négative (50).

5. Procédé pour produire un dispositif de stockage électrique (400a) selon la revendication 3 ou 4,
dans lequel une épaisseur T1 de la partie mince (432) et une épaisseur T2 de la partie épaisse (434) satisfont à une relation « 3/10 ≤ T1/T2 ≤ 7/10 ».

6. Procédé pour produire un dispositif de stockage électrique (100, 100a, 200a, 300a, 400a) selon l'une quelconque des revendications 1 à 5, qui comprend en outre :
le placement de l'élément enroulé (20) dans un boîtier (12) .

7. Procédé pour produire un dispositif de stockage électrique (100, 100a, 200a, 300a, 400a) selon l'une quelconque des revendications 1 à 6, qui comprend en outre :
le dopage de l'électrode négative (50) avec les ions lithium libérés à partir de la source lithium-ion (30).

8. Procédé pour produire un dispositif de stockage électrique (100, 100a, 200a, 300a, 400a) selon l'une quelconque des revendications 1 à 7,
dans lequel un séparateur (60, 62) est placé entre l'électrode positive (40) et l'électrode négative (50) lors de la formation de l'élément enroulé (20).

9. Procédé pour produire un dispositif de stockage électrique (100, 100a, 200a, 300a, 400a) selon l'une quelconque des revendications 1 à 8, dans lequel le procédé produit un condensateur lithium-ion en tant que dispositif de stockage électrique (100, 100a, 200a, 300a, 400a).

10. Dispositif de stockage électrique (100) obtenu par le procédé selon la revendication 1 ou 3, qui comprend :
un élément enroulé (20) qui est formé en enroulant une électrode positive (40) qui comprend une couche de matériau actif d'électrode positive (42) et un collecteur de courant d'électrode positive (44), une électrode négative (50) qui comprend une couche de matériau actif d'électrode négative (52) et un collecteur de courant d'électrode négative (54), et une feuille métallique (38), dans lequel la feuille métallique (38) comprend une pluralité de parties (38a, 38b) qui sont agencées dans une direction d'enroulement à travers un espace (136),
dans lequel l'élément enroulé (20) comporte une partie plate (22) et une partie incurvée (24),
dans lequel l'espace (136) est situé dans la partie incurvée (24), et
dans lequel une extrémité (138) de la feuille métallique (38) est située dans la partie incurvée (24).

11. Dispositif de stockage électrique (100) selon la revendication 10,
dans lequel au moins une partie de la feuille métallique (38) est située d'un côté extérieur de l'électrode positive (40) et de l'électrode négative (50).
